# EUROPEAN PATENT SPECIFICATION

(11) **EP 3 662 270 B1**
(45) Date of publication and mention of the grant of the patent: **24.04.2024**
(21) Application number: 18712212.2
(22) Date of filing: 21.03.2018
(51) Int. Cl.: G01N 21/84, B01D 1/00, B01D 9/00, C13B 30/02, G01N 21/51, G01N 21/53, G01N 21/55

(54) **METHOD AND APPARATUS FOR ANALYSING AND CONTROLLING A CRYSTALLISATION PROCESS**
VERFAHREN UND VORRICHTUNG ZUR ANALYSE UND STEUERUNG EINES KRISTALLISIERUNGSVERFAHRENS
PROCÉDÉ ET APPAREIL POUR ANALYSER ET COMMANDER UN PROCESSUS DE CRISTALLISATION

(30) Priority: 21.03.2017 DK PA201770201; 03.04.2017 EP 17164553
(43) Date of publication of application: 10.06.2020
(73) Proprietor: Bjarne Christian Nielsen Holding ApS, 6541 Bevtoft (DK)
(72) Inventor: NIELSEN, Bjarne, Christian, 6541 Bevtoft (DK)
(74) Representative: Inspicos P/S
(86) International application number: PCT/EP2018/057171
(87) International publication number: WO 2018/172412

(56) References cited:
- WO-A1-2016/198866
- CN-A- 103 335 981
- DE-A1-102004 047 417
- DE-A1-102006 030 734
- JP-A- 2005 087 087
- US-A- 4 056 364
- US-A- 5 124 265
- US-A1- 2013 265 584
- TADAYYON ET AL.: "Determination of Particle Size Distribution by Par-Tec 100: Modeling and Experimental Results", PART. PART. SYST. CHARACT., vol. 15, no. 3, June 1998 (1998-06), pages 127-135, XP002778198, ISSN: 0934-0866, DOI: 10.1002/(SICI)1521-4117(199817)15:3<127::A ID-PPSC127>3.0.CO;2-B
- Philip E. Plantz, PhD: "Blue Laser Technology Applied to the Microtrac Unified Scatter Technique for Full-Range Particle Size Measurement", SL-AN, vol. 25 7 December 2007 (2007-12-07), 7 December 2007 (2007-12-07), XP002778199, Retrieved from the Internet: URL:http://docplayer.net/20943698-Blue-las er-technology-applied-to-the-microtrac-uni fied-scatter-technique-for-full-range-part icle-size-measurement.html [retrieved on 2018-02-13]
- Plantz, Philip E.: "Particle size measurements from 0.1 to 1000 micro-meter, based on light scattering and diffraction" In: Barth, Howard G.: "Chemical Analysis: Modern methods of particle size analysis", 1984, John Wiley & Sons, New York, XP002778522, ISBN: 0-471-87571-6 vol. 73, pages 173-209, page 173, paragraph 1 - page 179, paragraph 2 page 191, paragraph 4 - page 200, paragraph 2; figure 15

## Description

### FIELD OF THE INVENTION

The present invention relates to a method and an apparatus for analysing and controlling a crystallisation process of a solution in response to light reflected from and/or light scattered from the solution.

### BACKGROUND OF THE INVENTION

It has over several years been acknowledged that the task of controlling a crystallisation process in a solution is generally very difficult. In particular, the task of controlling the amount of unwanted sub-wavelength sized kernels in a solution where sugar crystals are to be grown is very difficult.

The document Philip E. Plantz, PhD: "Blue Laser Technology Applied to the Microtrac Unified Scatter Technique for Full-Range Particle Size Measurement", SL-AN, vol. 25 7 December 2007 (2007-12-07), 7 December 2007 discloses a particle size measurement inter alia in a crystallization process based on a laser light scattering method whereby transmitted light and light scattered at 90° is evaluated.

The document JP 2005 087087 discloses a concentration on-line measuring device in a sugar crystal process, the device comprises an online refractometer which has a prism measuring junction.

The document US 5 124 265 A discloses a method and apparatus for crystallization process control by using a particle counter.

The document TADAYYON ET AL.: "Determination of Particle Size Distribution by Par-Tec 100: Modeling and Experimental Results", PART. PART. SYST. CHARACT., vol. 15, no. 3, June 1998, pages 127-135 describes a method for measuring particle size distribution whereby a laser beam is generated in the electronic unit and is sent to the probe via a fiber optic system. Inside the probe, using a set of lenses, the beam is focused on a focal point. A mechanical system inside the probe rotates the focal point in a circular path. The light is collected inside the probe and is transmitted back through the same path as the laser source but separated by a splitter.

The document US 4 056 364 A discloses a two stage continuous crystallization apparatus with controls using a refractometer.

The document JP 2005 087087 A discloses a particle size distribution measurement in a crystallisation-process. Back-scattering light is detected and evaluated.

The document CN 103 335 981 A discloses a device for on-line detection of concentration during crystallization of cane sugar based on measurements made by a refractometer.

Therefore, there seems to be a need for a method for controlling the amount of unwanted sub-wavelength sized kernels in a solution.

It may be seen as an object of embodiments of the present invention to provide a method for analysing and controlling a crystallisation process.

It may be seen as a further object of embodiments of the present invention to provide a method for analysing and controlling the growth sugar crystals.

### DESCRIPTION OF THE INVENTION

The above-mentioned objects are complied with by providing, in a first aspect, a method, as defined in claim 1, for analysing and controlling a crystallisation process of a solution.

Thus, the present invention relates, in a first aspect, to a method for detecting light reflected or scattered from the solution at at least two wavelengths or wavelength ranges. The crystallisation process may be performed in a solution being prepared for later centrifugation where for example crystalline sugar is separated from syrup.

The method according to the first aspect may in particular be suitable for detecting the presence of unwanted kernels in the solution before seeding. Moreover, the method according to the first aspect may advantageously be used in connection with accidental, excessive supersaturation leading to unwanted small crystals later in the crystallization process.

The term "essentially" is to be understood as exactly on the axis of exposure, or alternatively, a few degrees, such as up to 10 degrees, away from the axis of exposure. In case of detecting light being transmitted through the solution the light may be detected exactly on the axis of exposure. In case of detecting light being reflected or scattered from the solution the light may be detected a few degrees away from the axis of exposure in order not to block the light exposing at least part of the solution.

The predetermined wavelength range may comprise wavelengths between 200 nm and 1000 nm, such as between 300 nm and 900 nm, such as between 350 nm and 800 nm, such as between 380 nm and 750 nm.

The first portion of the predetermined wavelength may be between 620 nm and 750 nm, i.e. light in the red wavelength range. The second portion of the predetermined wavelength may be between 380 nm and 495 nm, i.e. light in the blue wavelength range.

The method according to the present invention may further comprise the step of determining one or more ratios between the determined intensities of the first and second portions of the predetermined wavelength range. Thus, one or more ratios between intensities of light in the red wavelength range and light in the blue wavelength range may be determined.

The light exposing the solution may be generated by one or more LEDs, , a mercury lamp, a Xenon lamp, or any other suitable broadband light source.

The light reflected or scattered from the solution may be detected using one or more light detectors sensitive at different wavelengths, or a single detector being sensitive to a plurality of wavelengths.

The method according to the first aspect further comprises the step of generating one or more control signals in response to the determined light intensity/intensities. At least one control signal may be used for determining whether one or more additives should be added to the solution. Alternatively or in combination therewith at least one control signal may be used for determining when one or more additives should be added to the solution. The one or more additives may comprise milled or pre-grown crystals, such as powdered sugar in the form of a powder or in a suspension.

At least one control signal may also be used for controlling the crystallization process, such as controlling the temperature, controlling a stirrer, controlling a vacuum for extracting steam from the solution, or controlling whether an additional amount of the solution to be crystallized should be added.

An example outside the claimed invention relates to a method for analysing and controlling a crystallisation process of a solution, the method comprising the steps of
1) exposing at least part of the solution to light, and
2) detecting light reflected or scattered from essentially plane crystal surfaces within the solution
wherein the solution is exposed to light over an area, and wherein the reflected or scattered light is averaged over at least part of said area at detection.

Thus, the reflected or scattered light from the solution originates from reflections or scattering from essentially plane crystal surfaces whereby the reflected or scattered light becomes a measure for the existence as well as the size of the crystals within the solution.

The method according to the example may in particular be suitable for detecting crystals, such as seeding crystals, having a size larger than 4 µm, such as larger than 6 µm, such as larger than 8 µm, such as larger than 10 µm, such as larger than 15 µm, which may be several times larger than the wavelength of the light exposing the solution. Thus, the method according to the example may find its primary use after seeding crystals have been added to the solution.

Light exposing at least part of the solution may comprise a plurality of wavelength or it may be monochromatic light. Preferably, the wavelength of the light exposing at least part of the solution is between 620 nm and 750 nm. The light reflected or scattered from the solution may have essentially the same wavelength or wavelength range compared to the light exposing at least part of the solution.

The area over which the solution is exposed may be at least 25 mm², such as at least 50 mm², such as at least 100 mm² or even more. The light reflected or scattered from the solution may be averaged over part of or over the total cross-sectional area of exposure and may become a measure for the formation of crystals, including the size of the crystals as well as the total crystal mass. The total crystal mass may be determined from the square root of the detected crystal size by raising this result to the third power, if the crystals have approximately the same size.

Similar to the first aspect the crystallisation process may be performed in a solution being prepared for later centrifugation where for example crystalline sugar is separated from syrup.

The method according to the example may further comprise the step of generating one or more control signals in response to the light intensity of the reflected or scattered light. At least one control signal may be used for determining whether one or more additives should be added to the solution. Alternatively or in combination therewith at least one control signal may be used for determining when one or more additives should be added to the solution. The one or more additives may comprise milled or pre-grown crystals, such as powdered sugar in the form of a powder or in a suspension.

At least one control signal may also be used for controlling the crystallization process, such as controlling the temperature, controlling a stirrer, controlling a vacuum for extracting steam from the solution, or controlling whether an additional amount of the solution to be crystallized should be added.

In a second aspect the present invention relates to an apparatus, as defined in claim 11, for performing the method according to the first aspect.

The various implementations, such as for example wavelength ranges, light sources, detectors, control signals etc., explained in relation to the first and second.

### BRIEF DESCRIPTION OF THE DRAWINGS

The present invention will now be described in further details with reference to the accompanying figures, wherein
Fig. 1 shows a first schematic of the physical setup, and
Fig 2 shows a second schematic of the physical setup.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its broadest aspect the present invention relates to a method and an apparatus for analysing and controlling a crystallisation process of a solution in response to light transmitted through and/or light reflected or scattered from the solution. In particular, the present invention aims at controlling an amount of unwanted sub-wavelength sized kernels in the solution. The present invention thus aims at determining whether unwanted sub-wavelength sized kernels are present in the solution, the amount of unwanted sub-wavelength sized kernels in the solution, and whether the amount of unwanted sub-wavelength sized kernels in the solution is decreasing, increasing or is essentially constant. As addressed above the crystallisation process may involve crystallisation of sugar in a syrup solution.

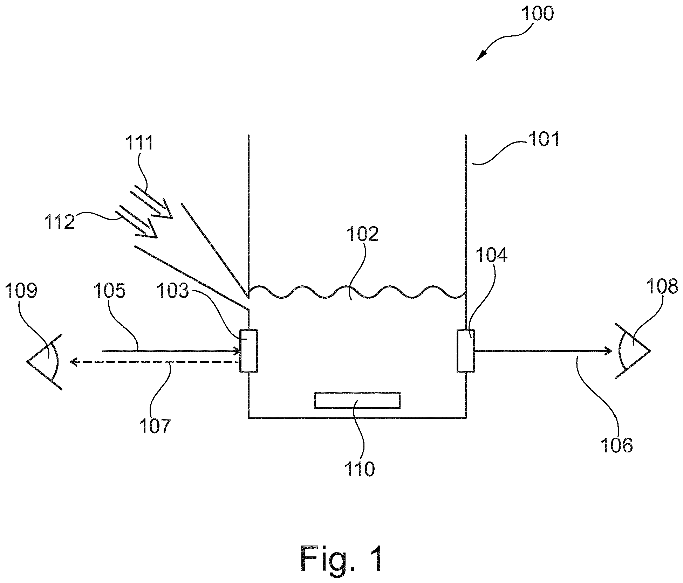

Referring now to Fig. 1 an arrangement 100 for performing the present invention is depicted. The solution 102, in which the crystallisation process takes place, is positioned in a container 101 having two optically transparent windows 103, 104. It should be noted that in an alternative configuration the container 101 may have only a single optically transparent window through which window light is allowed to enter 105 the container 101 as well as leaving 107 the container 101.

In the arrangement shown in Fig. 1 the optically transparent windows 103, 104 are arranged in opposing sidewalls of the container 101. A stirrer 110 may be provided within the container 101 as well. The solution is provided into the container 101 as indicated by the arrow 111. One or more additives may be added to the solution if required, cf. arrow 112, via the same opening or another opening. The one or more additives may comprise milled or pre-grown crystals, such as powdered sugar in the form of a powder or in a suspension.

A broadband light source (not shown) injects light 105 into the container via the optically transparent window 103. The injected light may cover a wavelength range between 200 nm and 1000 nm, such as between 300 nm and 900 nm, such as between 350 nm and 800 nm, such as between 380 nm and 750 nm. The broadband light source may comprise one or more LEDs, , a mercury lamp, a Xenon lamp, or any other suitable broadband light source.

Part of the injected light is transmitted linearly through 106 the solution 102 and may hence be detected by the detector 108, whereas another part of the injected light is, according to the claimed invention, reflected or scattered back linearly 107 from the solution and is hence detected by the detector 109. In order not to block the exposing light the detector 109 may be positioned slightly away from the axis of exposure 105 as depicted in Fig. 1.

In case unwanted sub-wavelength sized kernels are present in the solution 102 light may be scattered from the solution via Rayleigh scattering. The scattered light typically has a wavelength between 380 nm and 495 nm, i.e. light in the blue wavelength range. The detectors 108, 109 may comprise one or more light detectors sensitive at different wavelengths, or a single detector being sensitive to a plurality of wavelengths.

If the number of unwanted sub-wavelength sized kernels in the solution increases the Rayleigh scattering of light in the blue wavelength range increases as well. As a consequence the light transmitted through the solution and/or the light reflected or scattered from the solution becomes more dominated by red light due to the Rayleigh scattering, and thereby removal of the blue light. Thus, by monitoring the ratio between transmitted or reflected or scattered light in the blue and red wavelength ranges, the amount of unwanted sub-wavelength sized kernels in the solution may be detected effectively.

Light within the red wavelength range, such as between 620 nm and 750 nm, is not affected by Rayleigh scattering due to its longer wavelength. The amount of red light being reflected or scattered from the solution is therefore a measure for the number as well as the size of the crystals being capable of reflecting or scattering the incoming light, i.e. the larger the crystals the larger the reflection or scattering. The size of the crystals may increase over time until a certain crystal mass has been reached.

Detected intensities of the light transmitted through the solution and/or light reflected or scattered from the solution may be used to control various parameters including whether one or more additives should be added to the solution, when such one or more additives should be added to the solution and/or whether an additional amount of the solution to be crystallized should be added to the container. As previously addressed the one or more additives may comprise milled or pre-grown crystals, such as powdered sugar in the form of a powder or in a suspension.

Moreover, the detected intensities may be used for controlling the crystallization process itself, such as controlling the temperature, controlling a stirrer and/or controlling a vacuum for extracting steam from the solution.

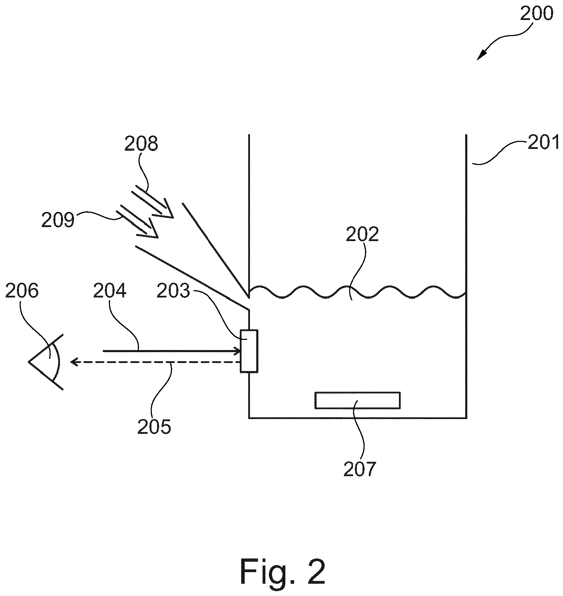

Referring now to Fig. 2 an alternative and simpler arrangement 200 for performing the present invention is depicted. The solution 202, in which the crystallisation process takes place, is positioned in a container 201 having a single optically transparent window 203. A stirrer 207 may be provided within the container 201 as well. The solution is provided into the container 201 as indicated by the arrow 208. One or more additives may be added to the solution if required, cf. arrow 209, via the same opening or another opening. The one or more additives may comprise milled or pre-grown crystals, such as powdered sugar in the form of a powder or in a suspension.

A light source (not shown) injects light 204 into the container via the optically transparent window 203. The injected light may be incoherent white light covering a wavelength range between 200 nm and 1000 nm, such as between 300 nm and 900 nm, such as between 350 nm and 800 nm, such as between 380 nm and 750 nm. Alternatively, the light source may, in an example outside the claimed invention, be a monochromatic light source preferably emitting light at a wavelength between 620 nm and 750 nm.

The light source may comprise one or more LEDs, , a mercury lamp, a Xenon lamp, or any other suitable broadband light source.

Part of the injected light is reflected or scattered 205 from the solution 202 and may hence be detected by the detector 206. In the arrangement shown in Fig. 2 the detector 206 is positioned slightly away from the axis of exposure 204 in order not to block the exposing light.

As addressed above light reflected or scattered 205 from the solution 202 may be a measure for the formation of crystals, including the size of the crystals and the amount/denseness of crystals, i.e. the crystal mass.

When the crystallisation process is completed the container is emptied and the solution is filled into either a batch centrifugal or a continuous centrifugal so that the grown crystals can be separated from the remaining part of the solution.

## Claims

1. A method for analysing and controlling a crystallisation process of a solution, the method comprising the steps of
1) exposing, along an axis of exposure, at least part of the solution to light covering a predetermined wavelength range,
2) detecting, at a position being essentially along the axis of exposure, light reflected or scattered back from the solution, and determining the intensities of the reflected or scattered light within a first and a second portion of the predetermined wavelength range, and
3) generating one or more control signals in response to the determined light intensities.

2. A method according to claim 1, wherein the predetermined wavelength range comprises wavelengths between 200 nm and 1000 nm, such as between 300 nm and 900 nm, such as between 350 nm and 800 nm, such as between 380 nm and 750 nm.

3. A method according to claim 1 or 2, wherein the first portion of the predetermined wavelength is between 620 nm and 750 nm.

4. A method according to any of the preceding claims, wherein the second portion of the predetermined wavelength is between 380 nm and 495 nm.

5. A method according to any of the preceding claims, further comprising the step of determining one or more ratios between the determined intensities of the first and second portions of the predetermined wavelength range.

6. A method according to any of the preceding claims, wherein the light reflected or scattered from the solution is detected using one or more light detectors sensitive at different wavelengths, or a single detector being sensitive to a plurality of wavelengths.

7. A method according to any of claims 1-6, wherein at least one control signal is used for determining whether one or more additives should be added to the solution.

8. A method according to any of claims 1-6, wherein at least one control signal is used for determining when one or more additives should be added to the solution.

9. A method according to claim 7 or 8, wherein the one or more additives comprise milled or pre-grown crystals, such as powdered sugar in the form of a powder or in a suspension.

10. A method according to claim 8 or 9, wherein at least one control signal is used for controlling the crystallization process, such as controlling the temperature, controlling a stirrer, controlling a vacuum for extracting steam from the solution, or controlling whether an additional amount of the solution to be crystallized should be added.

11. An apparatus for performing the method according to any of the preceding claims, said apparatus comprising
1) a light source for exposing, along an axis of exposure, at least part of the solution to light covering the predetermined wavelength range,
2) a light detector arrangement for detecting light reflected or scattered from the solution at a position being essentially along the axis of exposure, and
3) a signal processor for determining the intensities of the reflected or scattered light within the first and second portions of the predetermined wavelength range, and determining one or more ratios between the determined intensities of the first and second portions of the predetermined wavelength range, wherein the signal processor is furthermore configured for generating one or more control signals in response to the determined light intensities.

## Patentansprüche

1. Verfahren zum Analysieren und Steuern eines Kristallisationsprozesses einer Lösung, wobei das Verfahren die folgenden Schritte umfasst:
1) Bestrahlung mindestens eines Teils der Lösung mit Licht in einem vorgegebenen Wellenlängenbereich entlang einer Belichtungsachse,
2) Erfassen von Licht, das von der Lösung reflektiert oder zurück gestreut wird, an einer Position, die im Wesentlichen entlang der Belichtungsachse liegt, und Bestimmen der Intensitäten des reflektierten oder gestreuten Lichts innerhalb eines ersten und eines zweiten Teils des vorbestimmten Wellenlängenbereichs, und
3) Erzeugung eines oder mehrerer Steuersignale in Abhängigkeit von den ermittelten Lichtintensitäten.

2. Verfahren nach Anspruch 1, wobei der vorbestimmte Wellenlängenbereich Wellenlängen zwischen 200 nm und 1000 nm, beispielsweise zwischen 300 nm und 900 nm, beispielsweise zwischen 350 nm und 800 nm, beispielsweise zwischen 380 nm und 750 nm umfasst.

3. Verfahren nach Anspruch 1 oder 2, wobei der erste Teil der vorgegebenen Wellenlänge zwischen 620 nm und 750 nm liegt.

4. Verfahren nach einem der vorhergehenden Ansprüche, wobei der zweite Teil der vorbestimmten Wellenlänge zwischen 380 nm und 495 nm liegt.

5. Verfahren nach einem der vorhergehenden Ansprüche, das ferner den Schritt des Bestimmens eines oder mehrerer Verhältnisse zwischen den ermittelten Intensitäten des ersten und zweiten Teils des vorbestimmten Wellenlängenbereichs umfasst.

6. Verfahren nach einem der vorhergehenden Ansprüche, wobei das von der Lösung reflektierte oder gestreute Licht unter Verwendung eines oder mehrerer Lichtdetektoren, die für verschiedene Wellenlängen empfindlich sind, oder eines einzigen Detektors, der für mehrere Wellenlängen empfindlich ist, nachgewiesen wird.

7. Verfahren nach einem der Ansprüche 1-6, wobei mindestens ein Steuersignal verwendet wird, um zu bestimmen, ob der Lösung ein oder mehrere Zusatzstoffe zugesetzt werden sollen.

8. Verfahren nach einem der Ansprüche 1- 6, wobei mindestens ein Steuersignal verwendet wird, um zu bestimmen, wann ein oder mehrere Zusatzstoffe der Lösung zugesetzt werden sollten.

9. Verfahren nach Anspruch 7 oder 8, wobei der eine oder die mehreren Zusatzstoffe gemahlene oder vorgezüchtete Kristalle umfassen, wie z. B. Puderzucker in Form eines Pulvers oder in einer Suspension.

10. Verfahren nach Anspruch 8 oder 9, wobei mindestens ein Steuersignal zur Steuerung des Kristallisationsprozesses verwendet wird, wie z.B. die Steuerung der Temperatur, die Steuerung eines Rührers, die Steuerung eines Vakuums zum Abziehen von Dampf aus der Lösung oder die Steuerung, ob eine zusätzliche Menge der zu kristallisierenden Lösung zugegeben werden soll.

11. Vorrichtung zur Durchführung des Verfahrens nach einem der vorhergehenden Ansprüche, wobei die Vorrichtung umfasst:
1) eine Lichtquelle, um entlang einer Belichtungsachse zumindest einen Teil der Lösung mit Licht zu belichten, das den vorgegebenen Wellenlängenbereich abdeckt,
2) eine Lichtdetektoranordnung zum Erfassen des von der Lösung reflektierten oder gestreuten Lichts an einer Position, die im Wesentlichen auf der Belichtungsachse liegt, und
3) einen Signalprozessor zum Bestimmen der Intensitäten des reflektierten oder gestreuten Lichts innerhalb der ersten und zweiten Abschnitte des vorbestimmten Wellenlängenbereichs und zum Bestimmen eines oder mehrerer Verhältnisse zwischen den bestimmten Intensitäten der ersten und zweiten Abschnitte des vorbestimmten Wellenlängenbereichs, wobei der Signalprozessor ferner zum Erzeugen eines oder mehrerer Steuersignale als Reaktion auf die bestimmten Lichtintensitäten konfiguriert ist.

## Revendications

1. Procédé d'analyse et de contrôle d'un processus de cristallisation d'une solution, le procédé comprenant les étapes consistant à
1) exposer, le long d'un axe d'exposition, au moins une partie de la solution à une lumière couvrant une plage de longueurs d'onde prédéterminée,
2) détecter, à une position située essentiellement le long de l'axe d'exposition, la lumière réfléchie ou diffusée par la solution, et déterminer les intensités de la lumière réfléchie ou diffusée à l'intérieur d'une première et d'une deuxième partie de la plage de longueurs d'onde prédéterminée, et
3) générer un ou plusieurs signaux de commande en réponse aux intensités lumineuses déterminées.

2. Procédé selon la revendication 1, dans lequel la plage de longueurs d'onde prédéterminée comprend des longueurs d'onde comprises entre 200 nm et 1000 nm, telles que comprises entre 300 nm et 900 nm, telles que comprises entre 350 nm et 800 nm, telles que comprises entre 380 nm et 750 nm.

3. Procédé selon la revendication 1 ou la revendication 2, dans lequel la première partie de la longueur d'onde prédéterminée est comprise entre 620 nm et 750 nm.

4. Procédé selon l'une quelconque des revendications précédentes, dans lequel la deuxième partie de la longueur d'onde prédéterminée est comprise entre 380 nm et 495 nm.

5. Procédé selon l'une quelconque des revendications précédentes, comprenant en outre l'étape consistant à déterminer un ou plusieurs rapports entre les intensités déterminées de la première et de la deuxième partie de la plage de longueurs d'onde prédéterminée.

6. Procédé selon l'une quelconque des revendications précédentes, dans lequel la lumière réfléchie ou diffusée par la solution est détectée à l'aide d'un ou plusieurs détecteurs de lumière sensibles à différentes longueurs d'onde, ou d'un seul détecteur sensible à plusieurs longueurs d'onde.

7. Procédé selon l'une quelconque des revendications 1 à 6, dans lequel au moins un signal de commande est utilisé pour déterminer si un ou plusieurs additifs doivent être ajoutés à la solution.

8. Procédé selon l'une quelconque des revendications 1 à 6, dans lequel au moins un signal de contrôle est utilisé pour déterminer quand un ou plusieurs additifs doivent être ajoutés à la solution.

9. Procédé selon la revendication 7 ou la revendication 8, dans lequel le ou les additifs comprennent des cristaux broyés ou pré-croissés, tels que du sucre en poudre sous forme de poudre ou de suspension.

10. Procédé selon la revendication 8 ou la revendication 9, dans lequel au moins un signal de commande est utilisé pour contrôler le processus de cristallisation, tel que le contrôle de la température, le contrôle d'un agitateur, le contrôle d'un vide pour extraire la vapeur de la solution, ou le contrôle de l'ajout d'une quantité supplémentaire de la solution à cristalliser.

11. Appareil permettant de mettre en œuvre le procédé selon l'une quelconque des revendications précédentes, ledit appareil comprenant
1) une source de lumière destinée à exposer, le long d'un axe d'exposition, au moins une partie de la solution à une lumière couvrant la plage de longueurs d'onde prédéterminée,
2) un détecteur de lumière destiné à détecter la lumière réfléchie ou diffusée par la solution à une position située essentiellement le long de l'axe d'exposition, et
3) un processeur de signaux destiné à déterminer les intensités de la lumière réfléchie ou diffusée dans la première et la deuxième partie de la plage de longueurs d'onde prédéterminée, et
déterminer un ou plusieurs rapports entre les intensités déterminées de la première et de la deuxième partie de la plage de longueurs d'onde prédéterminée, dans lequel le processeur de signaux est en outre configuré pour générer un ou plusieurs signaux de commande en réponse aux intensités lumineuses déterminées.
